(19) Europäisches Patentamt
European Patent Office
Office européen des brevets

(11) **EP 3 076 149 B1**

(12) **EUROPEAN PATENT SPECIFICATION**

(45) Date of publication and mention
of the grant of the patent:
**01.11.2017 Bulletin 2017/44**

(51) Int Cl.:
**G01M 13/04** (2006.01)     **G01B 7/30** (2006.01)
**G01B 21/22** (2006.01)     **F16C 19/06** (2006.01)
**G01P 3/44** (2006.01)

(21) Application number: **16163026.4**

(22) Date of filing: **30.03.2016**

(54) **ENHANCEMENT OF PRECISION IN DETERMINING A CONTACT ANGLE IN A BALL BEARING**

VERBESSERUNG DER GENAUIGKEIT BEI DER BESTIMMUNG DES KONTAKTWINKELS EINES KUGELLAGERS

DETERMINATION PRECISE DE L'ANGLE DE CONTACT DANS UN ROULEMENT A BILLES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **31.03.2015 IT UB20150616**
**31.03.2015 IT UB20150445**
**25.06.2015 IT UB20151679**
**25.06.2015 IT UB20151662**

(43) Date of publication of application:
**05.10.2016 Bulletin 2016/40**

(73) Proprietor: **Elettrosystem SAS**
**14030 Scurzolengo (IT)**

(72) Inventors:
• **CONTI, Pier Paolo**
**14030 SCURZOLENGO (IT)**

• **TONA, Paolino**
**14030 SCURZOLENGO (IT)**

(74) Representative: **Bergadano, Mirko et al**
**Studio Torta S.p.A.**
**Via Viotti, 9**
**10121 Torino (IT)**

(56) References cited:
**EP-A1- 2 366 977         US-A- 5 423 218**
**US-A1- 2006 070 462**

• **LI Y ET AL: "The measurement of instantaneous angular speed", MECHANICAL SYSTEMS AND SIGNAL PROCESSING, LONDON, GB, vol. 19, no. 4, 1 July 2005 (2005-07-01), pages 786-805, XP004863161, ISSN: 0888-3270, DOI: 10.1016/J.YMSSP.2004.04.003**

## Description

## Technical Field of Invention

The present invention relates in general to determining a contact angle in a ball bearing and, in particular, to the enhancement of precision in determining a contact angle in a ball bearing.

## State of the Art

As is known, in a ball bearing the contact angle is defined as the angle between a radial plane perpendicular to the ball bearing axis, and a load influence line. In section, the contact angle is defined as the angle between the so-called contact line, i.e. the line that joins the points of contact between the balls and the ball races on the inner and outer rings and along which the load is transmitted from one race to the other, and a line perpendicular to the ball bearing axis.

A number of solutions are known in the literature for determining the contact angle of ball bearings.

A first solution is described in the United States patent US 5,423,218, where the contact angle is computed based on the analysis of the radial vibrations detected by an accelerometric sensor applied to the outer ring of the ball bearing. The inner ring is rotated, while the outer ring is kept stationary and subjected to an axial load. The signal detected by the sensor is transmitted to a frequency converter via an amplifier. The frequency converter determines the rotation frequency of the inner ring and the revolution frequency of the balls and computes the contact angle by processing these frequencies.

A second solution is described in the Japanese Utility Model JP-52 143 955-U, where the contact angle is computed based on the two measured parameters: the rotation of the inner ring and the rotation of the ball retaining cage (which corresponds to the revolution of the balls about the central axis of rotation of the ball bearing). A screen with opaque sectors is fixed on the cage and the outer ring is held stationary. By rotating the inner ring, the opaque sectors of the screen intercept a light beam from a photocell, enabling detection of the rotation of the cage.

However, this method is of little precision and limited in practice. In fact, for very small bearings where the space between the inner diameter of the outer ring and the outer diameter of the inner ring is minimal, applying a support on the cage for the screen with opaque sectors to detect cage rotation is problematic. Mounting of the screen is made more difficult if the bearing rings are flanged, or if the ball bearing is already assembled in a given apparatus/machine. The play existing between the balls and the seats in the cage where the balls are housed fails to allow determining the ball's revolution angle with precision. In addition, the screen mounted on the cage increases the inertial mass of the cage, and this may cause the balls to slip on the races of the rings and negatively affect the precision of contact angle measurement.

A third solution is described in the Japanese Patent JP 51 026824 B, where the contact angle is computed by means of an optical sensor. In particular, one of the rings is caused to rotate, while the other ring is kept stationary, the rotation speed of the rotating ring is then measured, as well as, via an optical sensor, either the ball revolution speed or the cage rotation speed. Finally, the contact angle is computed based on the rotation speed of the rotating ring, either the ball revolution speed or the cage rotation speed, the ball diameter and the ball pitch circle diameter.

An improvement of this solution is described in the European Patent EP 2 366 977 B1, where the optical sensor is constituted by a photoelectric sensor (photocell) that projects a light radiation, in particular a laser radiation, through the ball bearing, in the gap between the outer and inner rings, such that it is directly intercepted by the balls and/or the cage.

A further solution is described in the United States Patent Application Publication US 2006/070462 A1, where the radial or axial load between the inner and outer rings in double-row balls is computed based on the rotation speed of the two rows of balls and the rotation speed of the rotating ring.

## Object and Summary of the Invention

The Applicant has experimentally observed that the above-described prior art solutions have limits that fail to allow achieving sufficiently high precision in determining the contact angle to meet the increasingly exacting market demands.

The Applicant has experimentally observed that the limits of the above-described prior art solutions are ascribable not only to the criteria by which the contact angle is computed, but also the quantities based on which the contact angle is computed, including the ball revolution speed/frequency of the balls and the rotational speed/frequency of the rotating ring or cage.

The object of the present invention is to provide a solution that enables achieving higher precisions with respect to those achievable with the known methods, thereby enabling the determination of other geometric characteristics of the ball bearings that are not possible with the known solutions.

According to the present invention, an apparatus to determine the contact angle in a ball bearing is provided, as defined in the appended claims.

## Brief Description of Drawings

Figure 1 is an axial section view of a ball bearing;
Figure 2 schematically shows an apparatus for determining the contact angle in a ball bearing according to the present invention; and

Figure 3 shows the time developments of electrical quantities in the apparatus shown in Figure 1.

## Detailed Description of Preferred Embodiments of the Invention

The present invention will now be described in detail with reference to the accompanying drawings to enable those skilled in the art to embody it and use it. Various modifications to the described embodiments will be immediately obvious to those skilled in in the art, and the generic principles described herein can be applied to other embodiments and applications, without departing from the scope of the present invention, as defined in the appended claims. Thus, the present invention is not intended to be limited to the embodiments disclosed herein, but is to be accorded the widest scope consistent with the principles and features disclosed and claimed herein.

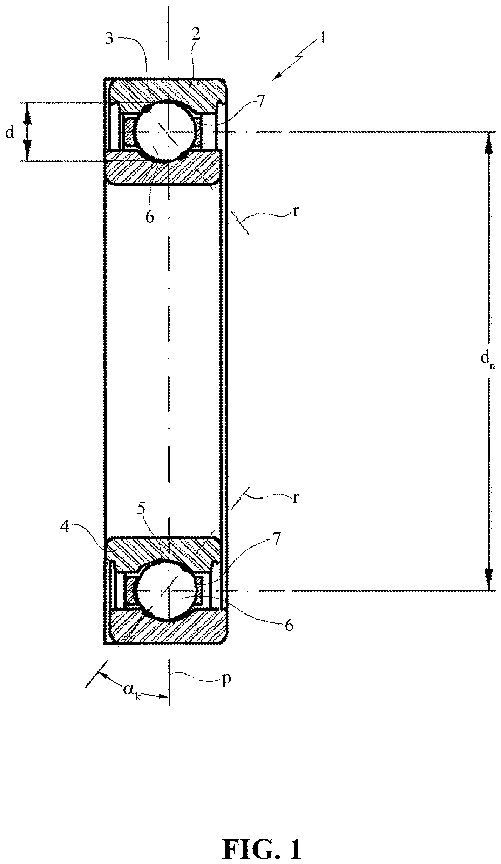

Figure 1 shows an axial section of a ball bearing, indicated as a whole by reference numeral 1, the contact angle $\alpha_k$ of which is to be measured.

The ball bearing 1 comprises an outer ring 2 with an outer race 3 on an inner peripheral wall thereof, an inner ring 4 with an inner race 5 on an outer peripheral wall thereof, and a plurality of balls 6 radially arranged between the outer 2 and inner 4 rings to roll between the outer and inner ball races 3, 5 and held circumferentially spaced apart one from another by a retaining cage 7.

Figure 1 also shows a straight line r passing through the contact points of each ball 6 with the outer and inner ball races 3, 5, which is inclined at an angle $\alpha_k$, known as contact angle, with respect to a radial plane $p$ passing through the centre of a first ball 6 and the centre of a second ball 6 arranged in a position diametrically opposite to the first ball 6. References $d$ and $d_m$ respectively indicate the diameter of the balls 6 and the mean diameter of the ball bearing 1, i.e. the diameter of the pitch circle passing through the centres of the balls 6.

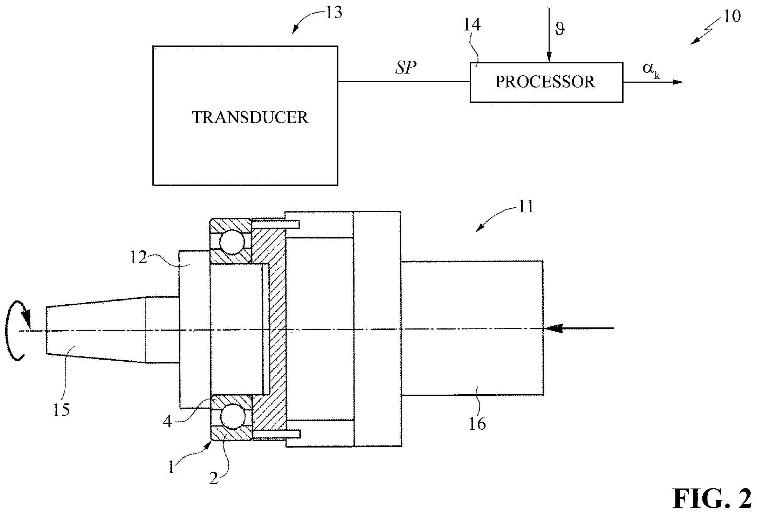

Figure 2 schematically shows an apparatus, indicated as a whole by reference numeral 10, to determine the contact angle $\alpha_k$ of the ball bearing 1.

As shown in Figure 2, the apparatus 10 basically comprises:

- a device 11 to rotate one of the rings 2, 4 of the ball bearing 1, while keeping the other one stationary, the device 11 being equipped with an angular position transducer 12 to measure the angular position of the rotating ring;
- a contactless ball passage transducer 13 to determine the passage of the balls 6 of the ball bearing 1 close to the contactless ball passage transducer 13 resulting from the rotation of the rotating ring; and
- an electronic processor 14 connected to angular position transducer 12 and to the contactless ball passage transducer 13 to compute the contact angle $\alpha_k$

of the ball bearing 1 based on the angular position of the rotating ring and the number of passages of the balls 6, as will be described in greater detail below.

In the embodiment shown in Figure 2, the device 11 comprises a rotating spindle 15 on which, during operation, the inner ring 4 is fitted so that it can be rotated, and a pusher 16 to exert, during operation, a constant axial load, for example in the order of 50 N, on the outer ring 2 so as to keep it stationary with respect to the inner ring 4.

In an alternative embodiment, the device 11 could instead be configured to rotate the outer ring 2, while keeping the inner ring 4 stationary.

The angular position transducer 12 comprises a rotary encoder coupled to the rotating spindle 15 to output an electric angular position signal $\vartheta$ indicative of a current angular position of the rotating spindle 15, and therefore of the rotating ring, which is the inner ring 4 in the example considered.

The contactless ball passage transducer 13 is mounted close to the ball bearing 1 so as to output an electric ball passage signal *SP* indicative of balls 6 passing close to the contactless ball passage transducer 13.

The contactless ball passage transducer 13 can be implemented using various technologies.

One possible implementation technology is that described in the above-indicated European Patent EP 2 366 977 B1, in which, as previously mentioned, the contactless ball passage transducer comprises a photoelectric sensor (photocell) that projects a light radiation, in particular a laser radiation, through the ball bearing in the gap between the outer and inner rings, such that it may be directly intercepted by the balls and/or the cage.

An alternative implementation technology may be that described in the Italian Patent Application filed by the Applicant on the same day as the present Application with filing number 102015000010414, in which the contactless ball passage transducer comprises an inductive eddy current sensor basically comprising an electronic oscillator to generate an alternating electric current having certain shape, amplitude and frequency, and a coil having a nominal impedance, connected to the electronic oscillator to receive an alternating supply current therefrom, and arranged close to the ball bearing so as to consequently generate a magnetic field the flux lines of which affect the balls of the ball bearing.

The magnetic field generated by the coil induces on the surface of the balls eddy currents which in turn generate an induced magnetic field that opposes the magnetic field induced by the coil, thus altering the impedance "seen" by the electronic oscillator. The change in coil impedance "seen" by the electronic oscillator inevitably reflects on the alternating electric current supplied by the electronic oscillator to the coil, the time development of which therefore contains information directly ascribable to the distance between the coil and the underlying metal object, namely it is indicative of the presence or absence of balls close to the coil. The alternating electric current supplied by the electronic oscillator to the coil thus represents the aforesaid electric ball passage signal.

Yet another alternative implementation technology may be that described in the Italian Patent Application filed by the Applicant on 25/06/2015 with filing number 102015000027671, in which the contactless ball passage transducer comprises a capacitive sensor basically comprising an electronic oscillator to generate an alternating electric current, and an electrode arranged facing the ball bearing and close to the balls, so as define, together with each of the balls that during rotation of the ball bearing become arranged in sequence facing the electrode (18), two armatures of a capacitor (C). The electronic oscillator is connected so as to generate and apply an alternating electric current between the electrode and the ball each time it faces the electrode, such that an alternating electric voltage is generated across the capacitor terminals, the amplitude of which depends on the presence or absence of the balls of the ball bearing close to the capacitive sensor. The alternating electric voltage across the capacitor terminals thus represents the aforesaid ball passage signal.

Yet a further alternative implementation technology may be that described in the Italian Patent Application filed by the Applicant on 25/06/2015 with filing number 102015000027681, in which the contactless ball passage transducer comprises an ultrasonic sensor basically comprising ultrasonic transmitter and receiver that share a piezoelectric crystal arranged so as to generate, when supplied with an alternating electric current of opportune shape, amplitude and frequency, and direct ultrasonic waves towards the balls, in such a way that they impact the balls and are reflected back therefrom towards the piezoelectric crystal, and to receive the ultrasonic waves reflected by the balls and generate the output ball passage signal.

Independently of the technology employed to implement the contactless ball passage transducer 13, to compute the contact angle $\alpha_k$ in the ball bearing 1, the rotating spindle 15 is driven, under the control of an electronic control unit, which may, for example, be constituted by or comprise the electronic processor 14, to rotate at a constant angular speed, thereby rotating the inner ring 4. The angular position signal $\vartheta$ supplied by the rotary encoder 12 and indicative of the angular position of the rotating inner ring 4, together with the ball passage signal $SP$ supplied by the contactless ball passage transducer 13, are then acquired by the electronic processor 14, which is programmed to compute the contact angle $\alpha_k$ based on the angular position signal $\vartheta$, the ball passage signal $SP$ and the following formula:

$$\alpha_k = \cos^{-1}\left(\frac{dm}{d} \cdot \frac{k}{R}\right)$$

where:

- $d$ is the diameter of the balls 6,
- $dm$ is the mean diameter of the ball bearing 1, which corresponds to the diameter of the pitch circle passing through the centres of the balls,
- $k$ is a proportionality constant, and
- $R$ is the ratio of the angular speed $\omega s$ of the balls 6 and the angular speed $\omega i$ of the rotated ring of the ball bearing 1, as described in greater detail below, with reference to Figure 5.

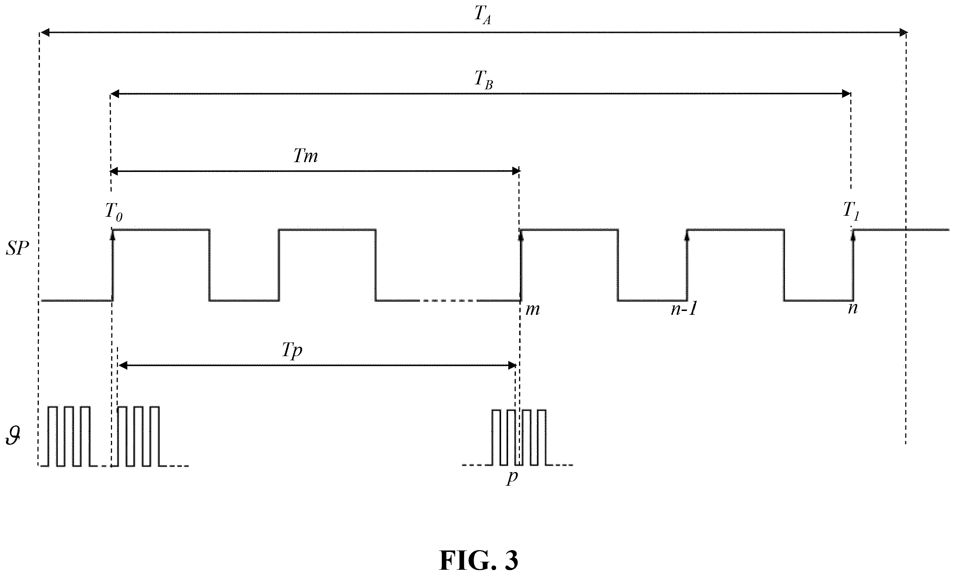

Figure 3 shows, purely by way of example, the time development of the angular position signal $\vartheta$ and of ball passage signal $SP$ opportunely squared (triggered), namely where the sequence of peaks and troughs generated by presence of a ball 6, or the space between two adjacent balls 6, close to the contactless ball passage transducer 13, are respectively represented by corresponding high and low electric levels, and where the passage of a ball corresponds to a pulse, i.e. a high electric level delimited by a corresponding pair of leading and trailing edges.

To compute $R$, the electronic processor 14 is programmed to:

- detect leading and trailing edges in the squared ball passage signal $SP$,
- identify the first and the last leading edges in the squared ball passage signal $SP$ in an analysis time interval $T_A$, that is stored in the electronic processor 14 and is adjustable, conveniently in the order of a few seconds; the times corresponding to the first and the last leading edges are indicated in Figure 5 as $T_0$, and $T_1$, respectively,

- compute the number s of passages of balls close to the contactless ball passage transducer 13 in the time interval $T_B=T_0-T_1$, where the number $s$ of passages of balls is equal to the number of pulses in the squared ball passage signal $SP$ in the time interval $T_B$, which in turn is equal to the number $n$ of leading edges in the ball passage signal $SP$ in the time interval $T_B$ reduced by one unit, i.e. $s=n-1$,
- compute a number $m<s$ of passages of balls such that $m$ is an integer multiple of the number $ns$ of balls 6 in the ball bearing 1,
- compute the time interval $Tm$ corresponding to the $m$ ball passages, which corresponds to the time elapsed from $T_0$ to the $m+1^{th}$ leading edge in the ball passage signal $SP$,
- compute the angular speed $\omega s$ of the balls 6, which corresponds to the angular displacement of the balls 6 in the time interval $Ts$, based on the following formula:

$$\omega s = \frac{m}{ns} \cdot \frac{1}{Tm}$$

- compute the number $p$ of complete pulses in the angular position signal $\vartheta$ in the time interval $Tm$; this number $p$ is equal to the number $i$ of leading edges in the angular position signal $\vartheta$ in the time interval $Tm$ reduced by one unit, i.e. $p=i-1$,
- compute the time interval $Tp$ corresponding to the $p$ complete pulses in the angular position signal $\vartheta$ in the time interval $Tm$,
- compute the angular speed $\omega i$ of the rotated ring of the ball bearing 1, which corresponds to the angular displacement of the rotated ring of the ball bearing 1 in the time interval $Tp$, based on the following formula:

$$\omega i = \frac{p}{ne} \cdot \frac{1}{Tp}$$

where $ne$ is the number of pulses generated by the angular position transducer 12 in a complete revolution of the live spindle 15, for example equal to 1024, and
- compute $R$ as the ration of the angular speeds $\omega s$ and $\omega i$:

$$R = \frac{\omega s}{\omega i} = \frac{\dfrac{m}{ns} \cdot \dfrac{1}{Tm}}{\dfrac{p}{ne} \cdot \dfrac{1}{Tp}}$$

This methodology of measuring the contact angle $\alpha_k$ enables such an improvement in measurement precision with respect to known techniques that it can also be used to measure other quantities in ball bearings, in particular the mean diameter $dm$ of the ball bearing 1 (and therefore the diameter of the inner ring 4 or outer ring 2) and the diameter $d$ of the balls, from the contact angle $\alpha_k$ based on the following formulae:

$$d = \frac{dm}{\cos \alpha_k} \cdot \frac{k}{R}$$

$$dm = d \cdot \cos \alpha_k \cdot \frac{R}{k}$$

From examination of the characteristics of the present invention it can be appreciated how it enables achieving the intended objectives and offers numerous advantages with respect to the known art.

In particular, instead of being based on the revolution speed/frequency of the balls and the rotational speed/frequency of the rotating ring or cage, as in the prior art solutions, determination of the contact angle carried out according to the above-described algorithm and based on the angular displacements of the rotated ring and the balls in given time intervals, enables achieving higher measurement precision with respect to that of known methods, thereby enabling the determination of other geometric ball bearing characteristics that was not possible with known methods. In particular, for the same measurement time, the present invention enables achieving levels of measurement precision an order of magnitude higher than those obtainable with solutions of the known art.

This is particularly true with regard to the methodology disclosed in the above-mentioned EP 2 366 977 B1, where the number of ball passages occurring in the period of time during which the rotated ring has made n revolutions is instead counted. In fact, this methodology fails to consider that a complete number of ball passages is not obtained upon completing n revolutions of the rotated ring, but as the number of passages is an integer not generally commensurable over n revolutions of the rotated ring, a counting error of at most one ball is made, with a consequently significant measuring error that can only be compensated by greatly extending the acquisition time.

Furthermore, the absence of parts to be mounted on the cage, and therefore the direct detection of passage of the balls or their retaining cage, makes the invention also applicable to small bearings, irrespective of the geometric shape (flanged or not) of the rings. Measurements are very accurate as they fail to be affected by play between the balls and cage. Measurements are also very accurate because nothing is mounted on the cage to detect rotation, and so there is no change in the inertial mass of the cage.

Another advantageous aspect, related to the absence of elements to mount on the bearing, is that the invention is particularly suitable for being implemented by using automated handling equipment for placing the bearings on the spindle and putting them back in production channel after taking measurements.

**Claims**

1. An apparatus (10) to determine a contact angle ($\alpha_k$) in a ball bearing (1);
   the ball bearing (1) comprises an outer ring (2), an inner ring (4), and a plurality of balls (6) radially arranged between the outer and inner rings (2, 4);
   the apparatus (10) comprises:

   - a device (11) to rotate one of the rings (2, 4), while keeping the other one stationary;
   - an angular position transducer (12) to output a position signal ($\vartheta$) indicative of an angular position ($\vartheta$) of the rotated ring (2, 4) of the ball bearing (1);
- a contactless ball passage transducer (13) to output a ball passage signal (*SP*) indicative of balls (6) of the ball bearing (1) passing close to the contactless ball passage transducer (13); and
- an electronic processor (14) connected to the angular position transducer (12) and to the contactless ball passage transducer (13) to compute the contact angle ($\alpha_k$) based on the position signal (𝜗) and the ball passage signal (*SP*);

**characterized in that** the electronic processor (14) is configured to compute the contact angle ($\alpha_k$) based on an angular displacement of the balls (6) in a first time interval (*Tm*) corresponding to a number (*m*) of passages of balls (6) that is an integer multiple of the number (*ns*) of balls (6) in the ball bearing (1) and is less than a number (*s*) of passages of balls close to the contactless ball passage transducer (13) in a reference time interval ($T_B$), and on a corresponding angular displacement of the rotated ring (2, 4) in a second time interval (*Tp*) corresponding to a number (*p*) of complete pulses in the position signal (𝜗) in the first time interval (*Tm*).

2. The apparatus (10) according to claim 1, wherein the electronic processor (14) is configured to compute the contact angle ($\alpha_k$) based on a ratio (*R*) of the angular displacement of the balls (6) and the corresponding angular displacement of the rotated ring (2, 4) in the first and second time intervals (*Tm*, *Tp*), respectively.

3. The apparatus (10) according to any one of the preceding claims, wherein the electronic processor (14) is configured to compute the contact angle ($\alpha_k$) based on a mathematical model that establishes a direct proportionality relationship between a cosine of the contact angle ($\alpha_k$) and a ratio (*R*) of an angular displacement of the balls (6) in a first time interval (*Tm*) and a corresponding angular displacement of the rotated ring (2, 4) in a second time interval (*Tp*).

4. The apparatus (10) according to any one of the preceding claims, wherein electronic processor (14) is configured to compute the contact angle ($\alpha_k$) according to the following formula:

$$\alpha_k = \cos^{-1}\left(\frac{dm}{d} \cdot \frac{k}{R}\right)$$

where:

- *d* is the diameter of the balls (6),
- *dm* is the mean diameter of the ball bearing (1), which corresponds to the diameter of a pitch circle passing through the centres of the balls (6),
- *k* is a proportionality constant, and
- R is the ratio of the angular displacement of the balls (6) and the corresponding angular displacement of the rotated ring (2, 4) in the respective time intervals (*Tm*, *Tp*).

5. The apparatus (10) according to any one of the preceding claims, wherein the electronic processor (14) is configured to compute the ratio (*R*) of the angular displacement of the balls (6) and the corresponding angular displacement of the rotated ring (2, 4) in the first and second time intervals (*Tm*, *Tp*) by:

- detecting leading and trailing edges in a squared ball passage signal (*SP*),
- identifying the first and the last leading edges in the squared passage signal (*SP*) in an analysis time interval ($T_A$),
- computing the number s of passages of balls close to the contactless ball passage transducer (13) in the time interval ($T_B$) between the identified first and the last leading edges,
- computing a number *m*<*s* of passages of balls such that *m* is an integer multiple of the number ns of balls (6) in the ball bearing (1),
- computing the first time interval *Tm* corresponding to the *m* ball passages,
- computing the angular speed *ωs* of the balls (6), which corresponds to an angular displacement of the balls (6) in the first time interval *Tm*, based on the following formula:

$$\omega s = \frac{m}{ns} \cdot \frac{1}{Tm}$$

- computing a number p di of complete pulses in the position signal (𝜗) in the first time interval *Tm*,
- computing the second time interval *Tp* corresponding to the *p* complete pulses,
- computing the angular speed *ωi* of the rotated ring of the ball bearing (1), which corresponds to the angular displacement of the rotated ring of the ball bearing (1) in the second time interval *Tp*, based on the following formula:

$$\omega i = \frac{p}{ne} \cdot \frac{1}{Tp}$$

where *ne* is the number of pulses generated by the angular position transducer (12) in a complete revolution, and
- computing *R* as the ratio of the angular speeds *ωs* and *ωi*:

$$R = \frac{\omega s}{\omega i} = \frac{\dfrac{m}{ns} \cdot \dfrac{1}{Tm}}{\dfrac{p}{ne} \cdot \dfrac{1}{Tp}}$$

**6.** The apparatus (10) according to claim 4 or 5, wherein the electronic processor (14) is further configured to compute the diameter ($d$) of the balls (6) and the mean diameter ($dm$) of the ball bearing (1) from the contact angle ($\alpha_k$) based on the following formulas:

$$d = \frac{dm}{\cos \alpha_k} \cdot \frac{k}{R}$$

$$dm = d \cdot \cos \alpha_k \cdot \frac{R}{k}$$

**7.** Software loadable on an electronic processor (14) of an apparatus (10) to determine a contact angle ($\alpha_k$) in a ball bearing (1) and designed to cause, when executed, the electronic processor (14) to become configured as claimed in any one of the preceding claims.

**Patentansprüche**

**1.** Vorrichtung (10) zur Ermittlung eines Kontaktwinkels ($\alpha_K$) in einem Kugellager (1);
das Kugellager (1) umfasst dabei einen Außenring (2), einen Innenring (4) und eine Vielzahl von Kugeln (6), die radial zwischen dem Außen- und Innenring (2, 4) angeordnet sind;
die Vorrichtung (10) umfasst:

- ein Gerät (11), um einen der Ringe (2, 4) zu drehen, während der andere stationär gehalten wird;
- einen Winkelpositionswandler (12), um ein Positionssignal ($\vartheta$) auszugeben, welches eine Winkelposition ($\vartheta$) des gedrehten Rings (2, 4) des Kugellagers (1) anzeigt;
- einen berührungslosen Kugeldurchgangswandler (13) zum Ausgeben eines Kugeldurchgangssignals (SP), wenn die Kugeln (6) des Kugellagers (1) nahe dem kontaktlosen Kugeldurchgangswandler (13) vorbei verlaufen; und
- einen mit dem Winkelpositionswandler (12) und dem kontaktlosen Kugeldurchgangswandler (13) verbundenen elektronischen Prozessor (14) zur Berechnung des Kontaktwinkels ($\alpha_K$) auf der Grundlage des Positionssignals ($\vartheta$) und des Kugeldurchgangssignals (SP);

**dadurch gekennzeichnet, dass** der elektronische Prozessor (14) so konfiguriert ist, dass dieser den Kontaktwinkel ($\alpha_K$) auf Grundlage einer Winkelverschiebung der Kugeln (6) in einem ersten Zeitintervall (Tm) entsprechend einer Anzahl (m) von Kugeln (6), die ein ganzzahliges Vielfaches der Anzahl (ns) von Kugeln (6) in dem Kugellager (1) und weniger als eine Anzahl (s) von Kugeln nahe dem kontaktlosen Kugeldurchgangswandler (13) in einem Referenzzeitintervall (TB) und bei einer Winkelverschiebung des gedrehten Ringes (2, 4) in einem zweiten Zeitintervall (Tp) entsprechend einer Anzahl (p) vollständiger Impulse des Positionssignals (ϑ) im ersten Zeitintervall (Tm) berechnet.

**2.** Vorrichtung (10) nach Anspruch 1, **dadurch gekennzeichnet, dass** der elektronische Prozessor (14) so konfiguriert ist, dass er den Kontaktwinkel ($\alpha_K$) auf der Grundlage eines Verhältnisses (R) der Winkelverschiebung der Kugeln (6) und des entsprechenden Winkels der gedrehten Ringe (2, 4) im ersten und zweiten Zeitintervall (Tm, Tp) berechnet.

**3.** Vorrichtung nach einem der vorhergehenden Ansprüche, **dadurch gekennzeichnet, dass** der elektronische Prozessor (14) so konfiguriert ist, dass dieser den Kontaktwinkel ($\alpha_K$) auf der Grundlage eines mathematischen Modells berechnet, welches eine direkte Proportionalitätsbeziehung zwischen dem Kosinus des Kontaktwinkels ($\alpha_K$) und einem Verhältnis (R) einer Winkelverschiebung der Kugeln (6) in einem ersten Zeitintervall (Tm) und einer entsprechenden Winkelverschiebung der gedrehten Ringe (2, 4) in einem zweiten Zeitintervall (Tp) herstellt.

**4.** Vorrichtung (10) nach einem der vorhergehenden Ansprüche, **dadurch gekennzeichnet, dass** der elektronische Prozessor (14) so konfiguriert ist, um den Kontaktwinkel ($\alpha_K$) gemäß der folgenden Formel zu berechnen:

$$\alpha_K = \cos^{-1} \left( \frac{dm}{d} * \frac{k}{R} \right)$$

wobei:

- (d) der Durchmesser der Kugeln (6) ist;
- (dm) der mittlere Durchmesser des Kugellagers (1) ist, der dem Durchmesser eines durch die Zentren der Kugeln (6) verlaufenden Teilkreiskreises entspricht;
- (k) eine Proportionalitätskonstante ist; und
- (R) das Verhältnis der Winkelverschiebung der Kugeln (6) und der entsprechenden Winkelverschiebung des gedrehten Ringes (2, 4) in den jeweiligen Zeitintervallen (Tm, Tp) ist.

**5.** Vorrichtung (10) nach einem der vorhergehenden Ansprüche, **dadurch gekennzeichnet, dass** der elektronische Prozessor (14) zum Berechnen des Verhältnis (R) der Winkelverschiebung der Kugeln (6) und der entsprechenden Winkelverschiebung der gedrehten Ringe (2, 4) im ersten und zweiten Zeitintervall (Tm, Tp) konfiguriert ist, durch:

- Erfassen von Vorder- und Hinterkanten in einem quadratischen Kugeldurchgangssignals (SP);
- Identifizieren der ersten und der letzten Vorderkanten in dem quadratischen Kugeldurchgangssignals (SP) in einem Analysezeitintervall (TA);
- Berechnen der Durchläufe von Kugeln nahe dem kontaktlosen Kugeldurchgangswandler (13) im Zeitintervall (TB) zwischen der identifizierten ersten und der letzten Vorderkante;
- Berechnen einer Anzahl (m<s) von Durchläufen der Kugeln, so dass m ein ganzzahliges Vielfaches der Anzahl (ns) der Kugeln (6) im Kugellager (1) ist;
- Berechnen des ersten Zeitintervalls Tm entsprechend den m Kugeldurchläufen;
- Berechnen der Winkelgeschwindigkeit ($\omega_s$) der Kugeln (6), die einer Winkelverschiebung der Kugeln (6) im ersten Zeitintervall Tm entspricht, basierend auf der folgenden Formel:

$$\omega_S = \frac{m}{ns} * \frac{1}{Tm}$$

- Berechnen einer Zahl p vollständiger Impulse des Positionssignals ($\vartheta$) im ersten Zeitintervalls (Tm);
- Berechnen des zweiten Zeitintervalls (Tp) entsprechend den p vollständigen Impulsen;
- Berechnen der Winkelgeschwindigkeit ($\omega_i$) des sich drehten Ringes des Kugellagers (1), die der Winkelverschiebung des gedrehten Ringes des Kugellagers (1) im zweiten Zeitintervall (Tp) entspricht, auf der Grundlage der folgenden Formel:

$$\omega_i = \frac{P}{ne} * \frac{1}{Tp}$$

wobei ne die Anzahl der von dem Winkelpositionswandler (12) erzeugten Pulse in einer kompletten Umdrehung sind, und
- das Verhältnis (R) der Winkelgeschwindigkeiten ($\omega_s$) und ($\omega_i$) wie folgt berechnet:

$$R = \frac{\omega s}{\omega i} = \frac{\frac{m}{ns} * \frac{1}{Tm}}{\frac{p}{ne} * \frac{1}{Tp}}$$

**6.** Vorrichtung (10) nach Anspruch 4 oder 5, **dadurch gekennzeichnet, dass** der elektronische Prozessor (14) ausgebildet ist, den Durchmesser (d) der Kugeln (6) und den mittleren Durchmesser (dm) des Kugellagers (1) aus dem Kontaktwinkel ($\alpha_K$) auf Grundlage der folgenden Formeln zu berechnen:

$$d = \frac{dm}{\cos \alpha_K} * \frac{k}{R}$$

$$dm = d * \cos \alpha_K * \frac{R}{k}$$

**7.** Software, die auf einen elektronischen Prozessor (14) einer Vorrichtung (10) zum Ermitteln eines Kontaktwinkels ($\alpha_K$) in einem Kugellager (1) ladbar ist und dazu ausgelegt ist, den elektronischen Prozessors (14) nach einem der vorhergehenden Ansprüche zu konfigurieren.

**Revendications**

**1.** Appareil (10) pour déterminer un angle de contact ($\alpha_k$) dans un roulement à billes (1) ;
le roulement à billes (1) comprenant une bague extérieure (2), une bague intérieure (4) et une pluralité de billes (6) agencées radialement entre les bagues extérieure et intérieure (2, 4) ;
l'appareil (10) comprenant :

- un dispositif (11) pour entraîner en rotation l'une des bagues (2, 4) tout en maintenant l'autre immobile ;
- un transducteur de position angulaire (12) pour délivrer un signal de position ($\vartheta$) indiquant une position angulaire ($\vartheta$) de la bague en rotation (2, 4) du roulement à billes (1) ;
- un transducteur de passage de billes sans contact (13) pour délivrer un signal de passage de billes (*SP*) indiquant que des billes (6) du roulement à billes (1) passent à proximité du transducteur de passage de billes sans contact (13) ; et
- un processeur électronique (14) relié au transducteur de position angulaire (12) et au transducteur de passage de billes sans contact (13) pour calculer l'angle de contact ($\alpha_k$) à partir du signal de position ($\vartheta$) et du signal de passage de billes (*SP*) ;

**caractérisé en ce que** le processeur électronique (14) est configuré pour calculer l'angle de contact ($\alpha_k$) à partir d'un déplacement angulaire des billes (6) dans un premier intervalle de temps *(Tm)* correspondant à un nombre *(m)* de passages de billes (6) qui constitue un entier multiple du nombre *(ns)* de billes (6) dans le roulement à billes (1) et qui est inférieur à un nombre *(s)* de passages de billes à proximité du transducteur de passage de billes sans contact (13) dans un intervalle de temps de référence ($T_B$), et d'un déplacement angulaire correspondant de la bague en rotation (2, 4) dans un deuxième intervalle de temps (*Tp*) correspondant à un nombre *(p)* d'impulsions complètes dans le signal de position ($\vartheta$) dans le premier intervalle de temps *(Tm)*.

2. Appareil (10) selon la revendication 1, dans lequel le processeur électronique (14) est configuré pour calculer l'angle de contact ($\alpha_k$) à partir d'un rapport *(R)* du déplacement angulaire des billes (6) et du déplacement angulaire correspondant de la bague en rotation (2, 4) respectivement dans les premier et deuxième intervalles de temps (*Tm, Tp*).

3. Appareil (10) selon l'une quelconque des revendications précédentes, dans lequel le processeur électronique (14) est configuré pour calculer l'angle de contact ($\alpha_k$) à partir d'un modèle mathématique qui établit une relation de proportionnalité directe entre un cosinus de l'angle de contact ($\alpha_k$) et un rapport *(R)* d'un déplacement angulaire des billes (6) dans un premier intervalle de temps (*Tm*) et un déplacement angulaire correspondant de l'anneau en rotation (2, 4) dans un deuxième intervalle de temps (*Tp*).

4. Appareil (10) selon l'une quelconque des revendications précédentes, dans lequel le processeur électronique (14) est configuré pour calculer l'angle de contact ($\alpha_k$) selon la formule suivante :

$$\alpha_k = \cos^{-1}\left(\frac{dm}{d} \cdot \frac{k}{R}\right)$$

dans laquelle :

- *d* représente le diamètre des billes (6),
- *dm* représente le diamètre moyen du roulement à billes (1), lequel correspond au diamètre d'un cercle primitif passant par les centres des billes (6),
- *k* représente une constante de proportionnalité, et
- *R* représente le rapport du déplacement angulaire des billes (6) et du déplacement angulaire correspondant de la bague en rotation (2, 4) dans les intervalles de temps respectifs (*Tm, Tp*).

5. Appareil (10) selon l'une quelconque des revendications précédentes, dans lequel le processeur électronique (14) est configuré pour calculer le rapport (R) du déplacement angulaire des billes (6) et du déplacement angulaire correspondant de la bague en rotation (2, 4) dans les premier et deuxième intervalles de temps (*Tm, Tp*) par :

- détection de flancs avant et arrière dans un signal de passage de bille carré (*SP*),
- identification des premier et dernier flancs montants dans le signal de passage carré (*SP*) dans un intervalle de temps d'analyse ($T_A$),
- calcul du nombre s de passages de billes à proximité du transducteur de passage de billes sans contact (13) dans l'intervalle de temps ($T_B$) entre les premier et deuxième flancs montants identifiés,
- calcul d'un nombre *m<s* de passages de billes de sorte que *m* soit un entier multiple du nombre *ns* de billes (6) dans le roulement à billes (1),
- calcul du premier intervalle de temps *Tm* correspondant aux *m* passages de billes,
- calcul de la vitesse angulaire *ωs* des billes (6), laquelle correspond à un déplacement angulaire des billes (6) dans le premier intervalle de temps *Tm,* à partir de la formule suivante :

$$\omega s = \frac{m}{ns} \cdot \frac{1}{Tm}$$

- calcul d'un nombre *p* di d'impulsions complètes dans le signal de position ($\vartheta$) dans le premier intervalle de temps *Tm,*
- calcul du deuxième intervalle de temps *Tp* correspondant aux *p* impulsions complètes,
- calcul de la vitesse angulaire *ωi* de la bague en rotation du roulement à billes (1), laquelle correspond au déplacement angulaire de la bague en rotation du roulement à billes (1) dans le deuxième intervalle de temps *Tp,* à partir de la formule suivante

$$\omega i = \frac{p}{ne} \cdot \frac{1}{Tp}$$

dans laquelle *ne* représente le nombre d'impulsions générées par le transducteur de position angulaire (12) durant un tour complet, et
- calcul de R comme le rapport des vitesses angulaires *ωs* et *ωi* :

$$R = \frac{\omega s}{\omega i} = \frac{\dfrac{m}{ns} \cdot \dfrac{1}{Tm}}{\dfrac{p}{ne} \cdot \dfrac{1}{Tp}}$$

6. Appareil (10) selon la revendication 4 ou 5, dans lequel le processeur électronique (14) est configuré en outre pour calculer le diamètre ($d$) des billes (6) et le diamètre moyen ($dm$) du roulement à billes (1) à l'aide de l'angle de contact ($\alpha_k$) à partir des formules suivantes :

$$d = \frac{dm}{\cos \alpha_k} \cdot \frac{k}{R}$$

$$dm = d \cdot \cos \alpha_k \cdot \frac{R}{k}$$

7. Logiciel chargeable sur un processeur électronique (14) d'un appareil (10) pour déterminer un angle de contact ($\alpha_k$) dans un roulement à billes (1) et conçu pour amener, lors de son exécution, le processeur électronique (14) à se configurer selon l'une quelconque des revendications précédentes.

**FIG. 1**

FIG. 2

EP 3 076 149 B1

**FIG. 3**

$T_A$, $T_B$, $T_1$, $T_0$, $T_m$, $T_p$, $SP$, $\vartheta$, $n$, $n-1$, $m$, $p$

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5423218 A
- JP 52143955 U
- JP 51026824 B
- EP 2366977 B1
- US 2006070462 A1
- IT 102015000027671
- IT 102015000027681